# DEMANDE DE BREVET EUROPEEN

(11) **EP 3 112 549 A1**
(43) Date de publication de la demande: **04.01.2017**
(21) Numéro de dépôt: 15174818.3
(22) Date de dépôt: 01.07.2015
(51) Int. Cl.: E04C 2/52, E04B 9/00, E04B 5/48, F24D 3/16

(54) **PANNEAU DE CONSTRUCTION DESTINÉ À LA RÉALISATION DE PAROIS CHAUFFANTES ET/OU REFROIDISSANTES DE BÂTIMENTS**

(71) Demandeur: KEOKI Company SA, 1752 Villars-sur-Glane (CH)
(72) Inventeur: Baratti, Alberto, 13017 Quarona Sesia, VC (IT); Bocciolone, Fausto, 13018 Valduggia, VC (IT); Cassetta, Paolo, 13853 Lessona, BI (IT)
(74) Mandataire: P&TS SA (AG, Ltd.)

(57) **Abrégé**

L'invention concerne un panneau de construction (10) destiné à la réalisation de parois chauffantes et/ou refroidissantes de bâtiments comprenant:
- un élément de base (11) défini par une face supérieure (11a), une face inférieure (11 b) et plusieurs faces latérales (11 c),
- des moyens de circulation (12) d'un fluide caloporteur ou refroidisseur disposés à l'intérieur dudit élément de base (11),
- un élément conducteur (13) sensiblement plat, fixé sur la face supérieure (11 a) de l'élément de base (11) de telle sorte à la recouvrir entièrement ou presque entièrement, ledit élément conducteur (13) possédant une bonne conductivité thermique,
- des moyens de connexion mécanique (9) solidaires dudit élément de base (11), lesdits moyens de connexion mécanique (9) étant aptes à assurer une fixation amovible dudit panneau de construction avec un panneau de construction identique ou similaire disposé de manière adjacente à ce dernier,
- des moyens de connexion fluidique (17) aptes à permettre la circulation du fluide caloporteur ou refroidisseur entre ledit panneau de construction et un panneau de construction identique ou similaire fixé à ce dernier,
- des moyens de détection de fuite (14) aptes à détecter une fuite du fluide caloporteur ou refroidisseur au niveau de la face inférieure (11 b) ou supérieure (11 a) de l'élément de base (11).

## Description

### Domaine technique

La présente invention concerne un panneau de construction pour la réalisation de parois chauffantes et/ou refroidissantes de bâtiments. Elle concerne également une paroi formée par l'assemblage de tels panneaux, ainsi qu'un système d'alimentation en fluide caloporteur ou refroidisseur destiné à être raccordé à un circuit de chauffage et/ou de refroidissement formé à l'intérieur de ladite paroi.

### Etat de la technique

Dans le domaine du chauffage et/ou du refroidissement des bâtiments, il est connu d'intégrer des circuits de chauffage et/ou de refroidissement à l'intérieur des parois, telles que planchers, murs ou plafonds. De tels circuits de chauffage consistent généralement en un réseau de tubes à l'intérieur desquels un fluide caloporteur ou refroidisseur circule. L'inconvénient de cette technique connue est la nécessité de faire appel à une entreprise spécialisée pour la mise en place de tels circuits. Par ailleurs, cette technique nécessite d'effectuer de gros travaux de construction pour intégrer lesdites tubes à l'intérieur des parois. Elle n'est donc pas adaptée pour des bâtiments déjà construits, dans lesquels les tubes devraient être intégrés aux parois existantes. En outre, cette technique connue présente un inconvénient majeur en cas de fuite du fluide caloporteur ou refroidisseur. En effet, du fait du temps généralement long séparant la survenance de la fuite et sa détection par les occupants du bâtiment, ce genre de fuite entraîne souvent une dégradation importante de la paroi et du bâtiment en général, ce qui a pour conséquence d'accroître exagérément les coûts des travaux de réparation par la suite. Par ailleurs, une fois la fuite détectée, il est très difficile pour le réparateur, étant donné la difficulté d'accéder aux tubes cachés à l'intérieur des parois des bâtiments, d'une part de savoir à quel niveau se situe la fuite et d'autre part de remplacer rapidement et simplement le ou les tubes défaillants. Il est donc souvent contraint d'endommager partiellement la paroi pour pouvoir accéder auxdits tubes.

### Divulgation de l'invention

L'objet de la présente invention est donc de proposer une solution au problème mentionné précédemment.

A cet effet, conformément à l'invention, il est proposé un panneau de construction tel que défini dans la revendication 1.

D'autres caractéristiques importantes du panneau de construction de la présente invention sont également définies dans les revendications dépendantes 2 à 12.

L'invention concerne également une paroi selon les revendications 13 à 14, ainsi qu'un système d'alimentation en fluide caloporteur ou refroidisseur selon la revendication 15.

Ainsi configurée, l'invention permet une mise en place rapide et simplifiée d'un circuit de chauffage et/ou de refroidissement à l'intérieur d'une paroi d'un bâtiment, et, ce, sans devoir faire appel à une entreprise spécialisée. Par ailleurs, la paroi de l'invention pouvant être installée par-dessus une paroi existante du bâtiment, il est envisageable d'utiliser la solution de l'invention à l'intérieur de bâtiments déjà construits.

En outre, les moyens de détection mis en place au niveau de chaque panneau permettent de détecter immédiatement lorsqu'une fuite se produit et le positionnement précis de cette fuite. Une fois la fuite détectée, des moyens de contrôle pourront stopper automatiquement le système d'alimentation en fluide pour éviter toute arrivée de fluide supplémentaire et/ou émettre une alarme visuelle ou sonore pour indiquer aux occupants de l'immeuble qu'une fuite est en train de se produire. Dans une des variantes de l'invention, l'arrêt du système d'alimentation en fluide ne se fera pas automatiquement, mais résultera de l'intervention manuelle d'un opérateur. Les conséquences fâcheuses d'une propagation trop importante de la fuite à l'intérieur du bâtiment seront donc évitées. Par ailleurs, du fait du principe de modularité de la paroi de l'invention, le réparateur pourra facilement remplacer le ou les panneaux défectueux sans avoir à démonter l'ensemble de la paroi. La réparation de la fuite en sera donc considérablement simplifiée.

### Brève description des dessins

D'autres avantages et caractéristiques de la présente invention seront mieux compris à la lecture d'un mode particulier de réalisation de l'invention et en référence aux dessins dans lesquels:
- la figure 1 est une vue en perspective éclatée d'un panneau de construction selon l'invention;
- la figure 2 est une vue partielle, en perspective et de dessous, de l'élément de base d'un panneau de construction identique ou similaire au panneau représenté sur la figure 1;
- la figure 3 est une vue partielle, en perspective et de dessus, des éléments de base respectifs de deux panneaux de construction identiques ou similaires au panneau représenté sur la figure 2, la vue mettant en évidence les moyens de connexion fluidique mis en place au niveau des faces latérales adjacentes des deux panneaux;
- la figure 4 est une vue partielle, en coupe, d'un premier mode de réalisation d'un moyen apte à assurer la connexion fluidique de deux panneaux de construction adjacents selon l'invention;
- la figure 5 est une vue partielle, en coupe, d'un deuxième mode de réalisation d'un moyen apte à assurer la connexion fluidique de deux panneaux de construction adjacents selon l'invention;
- la figure 6 est une vue en perspective et de dessus d'une paroi selon l'invention, dans lequel les éléments conducteurs de chacun des panneaux ont été retirés;
- la figure 7 est une vue agrandie d'une zone de la paroi représentée sur la figure 6;
- la figure 8 est une vue en perspective et de dessus d'un élément additionnel pouvant faire partie d'un panneau de construction identique ou similaire au panneau représenté sur la figure 1.

### Description détaillée d'un mode d'exécution de l'invention

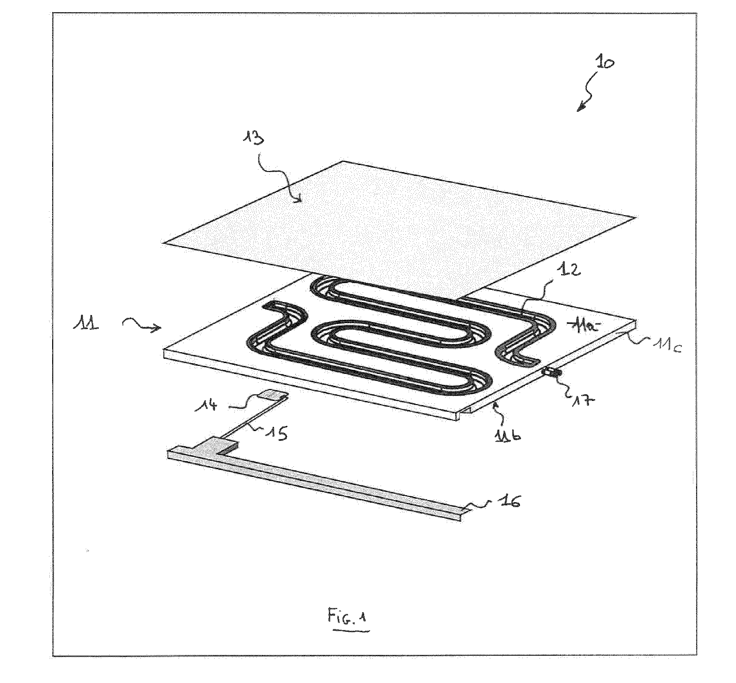

En référence à la figure 1, il est représenté un panneau de construction selon la présente invention. Ce panneau de construction 10 comprend notamment un élément de base 11 se présentant sous la forme d'une plaque sensiblement rectangulaire d'une certaine épaisseur, ladite plaque étant définie par sa face supérieure 11 a, sa face inférieure 11 b et ses quatre faces latérales 11 c. L'élément de base 11 sera préférentiellement formée par moulage d'une résine thermoplastique isolante et ignifuge. Lors de la formation de l'élément de base 11, des rigoles 12 ont été réalisées au niveau de la surface supérieure 11a, lesdites rigoles étant configurées pour permettre la circulation d'un fluide caloporteur ou refroidisseur à travers le panneau 10. Les rigoles 12 seront avantageusement disposées de manière à couvrir au moins partiellement la surface de l'élément de base, permettant ainsi une répartition homogène de la chaleur ou du froid à travers le panneau. Ainsi, dans une des dispositions possibles représentée sur la figure 1, les rigoles 12 définissent une forme de serpentin.

Le panneau 10 comprend également un élément conducteur 13 se présentant sous la forme d'une plaque sensiblement plate, ladite plaque étant fixée sur la face supérieure 11 a de l'élément de base 11 de telle sorte à la recouvrir entièrement ou presque entièrement. Dans une configuration possible de l'invention, l'élément conducteur 13 pourra avoir des dimensions suffisantes pour couvrir totalement la face supérieure de plusieurs éléments de base de plusieurs panneaux adjacents fixés ensemble, lesdits panneaux définissant une paroi d'un bâtiment. L'élément conducteur possédera une bonne conductivité thermique et sera préférentiellement réalisé en acier, en grès ou en céramique. Il pourra être recouvert d'un vernis de décoration sur sa face qui n'est pas en contact avec l'élément de base, de manière à conférer au panneau un aspect esthétique particulier.

Dans une configuration non représentée de l'invention, le panneau 10 pourra également comprendre un élément isolant se présentant sous la forme d'une plaque sensiblement plate, ladite plaque étant fixée sur la face inférieure 11 b de l'élément de base 11 de telle sorte à la recouvrir entièrement ou presque entièrement. L'élément isolant possédera une faible conductivité thermique.

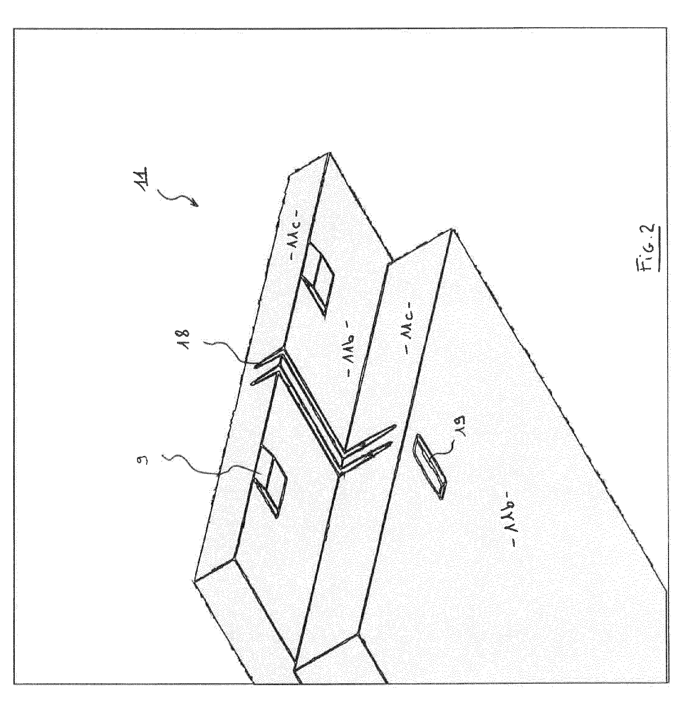

Le panneau 10 comprend également un système de montage/démontage rapide intégré à l'élément de base 11 de manière à permettre la fixation amovible dudit panneau de construction avec un panneau de construction identique ou similaire disposé de manière adjacente à ce dernier dans une paroi d'un bâtiment. Dans la configuration représentée sur la figure 2, ce système de montage/démontage rapide est formé par des pattes 9 formées par moulage et disposées en saillie sur la face inférieure 11 b de l'élément de base 11, lesdites pattes en saillie étant destinées à être reçues à l'intérieur de creux correspondants formés dans la face supérieure d'un élément de base du panneau adjacent sur lequel vient se fixer le panneau 10. Cette fixation pourra notamment se faire par encliquetage. D'autres moyens de connexion mécaniques amovibles pourront toutefois être envisagés.

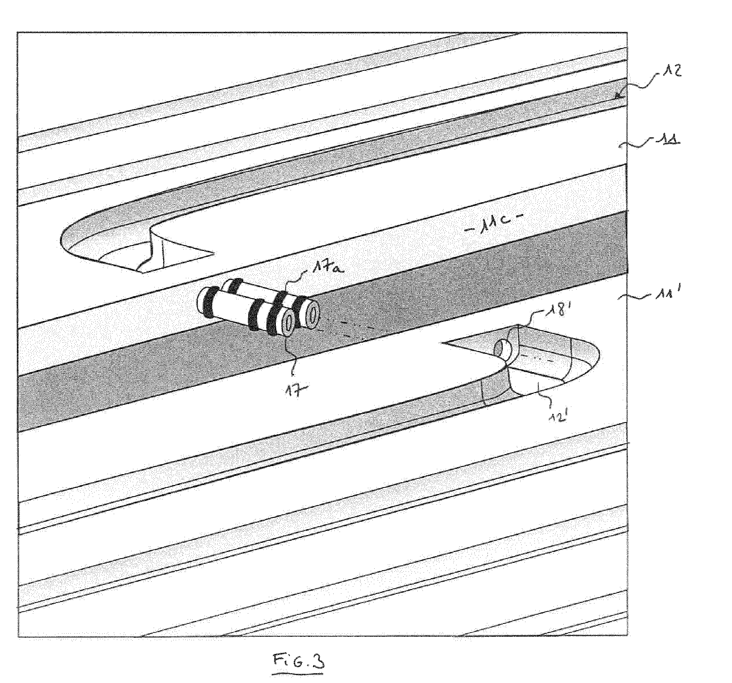

Lors de l'assemblage de deux panneaux adjacents, il est important de faire communiquer les rigoles d'un des panneaux avec les rigoles de l'autre panneau de manière à assurer la circulation du fluide caloporteur ou refroidisseur entre les deux panneaux. A cette fin, et tel que représenté sur les figures 1 à 3, un moyen envisageable consiste à prévoir un ou plusieurs tubes creux ou parties tubulaires creuses 17 dépassant au niveau d'une face latérale 11 c de l'élément de base, ledit tube ou ladite partie tubulaire étant munie le long de sa périphérie et de manière espacée de plusieurs joints d'étanchéité O-ring 17a, ou d'autres moyens d'étanchéité équivalents. Ces tubes ou parties tubulaires 17 sont configurés pour venir s'introduire à l'intérieur de trous traversants 18' formés à l'intérieur de l'élément de base 11' d'un panneau adjacent au panneau 10. Comme représenté sur la figure 2, de tels trous traversants 18 pourront avantageusement être formés à l'intérieur de l'élément de base 11 du panneau 10 de manière à permettre la connexion fluidique entre le panneau 10 et un panneau adjacent sur la face latérale 11 c qui est opposée à celle représentée sur la figure 2. Les trous traversants 18, respectivement 18', débouchent sur une de leurs extrémités sur une des rigoles 12, respectivement 12', de l'élément de base 11, respectivement 11', et sur leur autre extrémité sur une des faces latérales de l'élément de base, la position desdits trous traversants étant sensiblement alignée avec la position des tubes ou parties tubulaires 17 lorsque les éléments de base 11 et 11' sont correctement positionnés pour permettre l'assemblage des deux panneaux adjacents.

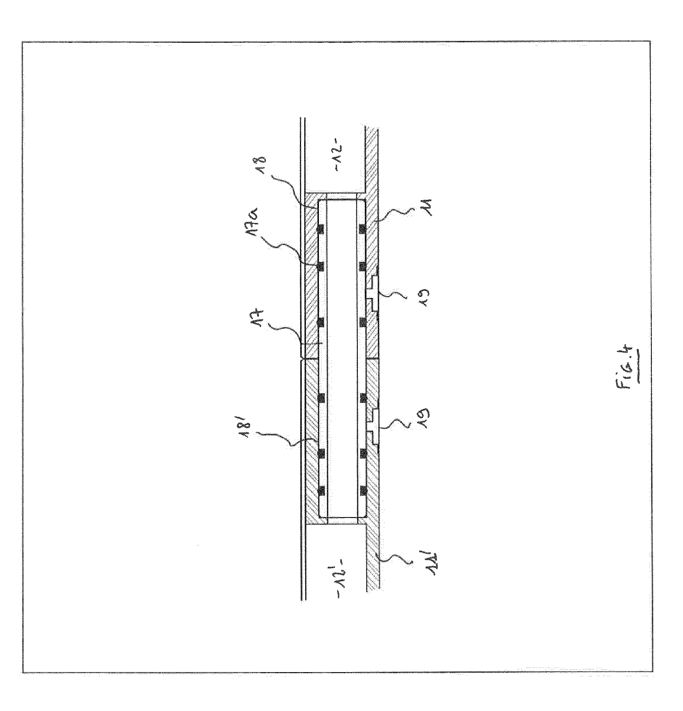

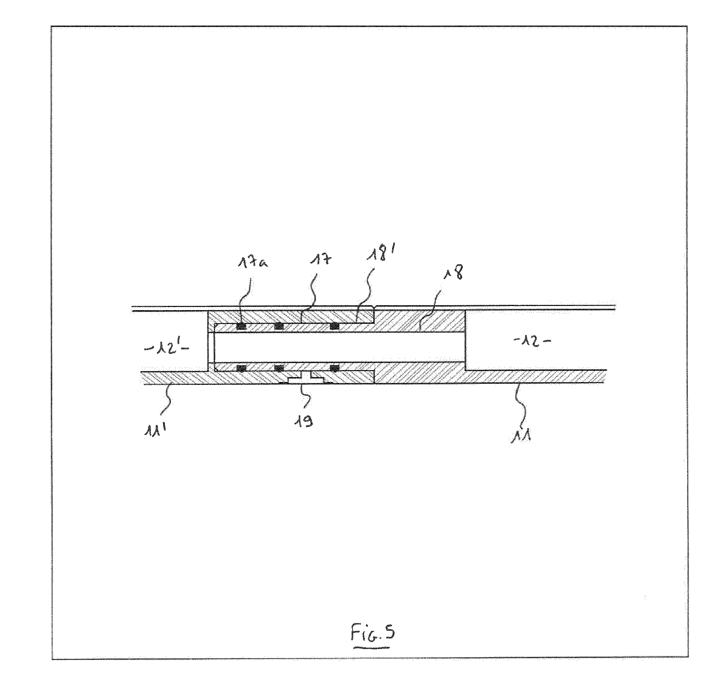

Comme représentés sur les figures 4 et 5, plusieurs solutions techniques sont envisageables pour réaliser de tels moyens de connexion fluidiques.

Dans la configuration représentée sur la figure 4, un tube 17 muni de joints d'étanchéité de type O-ring 17a est utilisé en tant que pièce mâle et est inséré à l'intérieur de deux trous traversants 18 et 18' formés respectivement dans les éléments de base 11 et 11' de deux panneaux adjacents fixés ensemble. De la sorte, une des extrémités du tube 17 est en communication fluidique avec une rigole 12 de l'élément de base 11 et une autre extrémité du tube 17 est en communication fluidique avec une rigole 12' de l'élément de base 11'.

Dans la configuration représentée sur la figure 5, une partie tubulaire 17 munie de joints d'étanchéité de type O-ring 17a et moulée par injection ou co-moulée avec l'élément de base 11 d'un des panneaux dépasse d'une des faces latérales 11 c et est inséré à l'intérieur d'un trou traversant 18' formé dans l'élément de base 11' du panneau adjacent. De la sorte, une des extrémités de la partie tubulaire 17 est en communication fluidique avec une rigole 12' de l'élément de base 11' et une autre extrémité du tube 17 est en communication fluidique avec un trou traversant 18 formé dans l'élément de base 11, lui-même débouchant sur une rigole 12 de l'élément de base 11.

De manière à détecter une éventuelle fuite de fluide au niveau de ces moyens de connexion fluidique, notamment du fait de l'usure des joints d'étanchéité 17a, ce qui a généralement pour conséquence la propagation de fluide au niveau de la face inférieure 11 b de l'élément de base, il est prévu d'équiper le panneau 10 de moyens de détection de fuite. Comme représenté sur la figure 1, de tels moyens de détection 14 pourront être positionnés sous la face inférieure 11 b de telle sorte à être à l'aplomb d'une cavité 19 formée dans l'élément de base 11, telle que représentée sur les figures 2, 4 et 5. La cavité 19 débouche ainsi à l'une de ses extrémités sur la face inférieure 11 b de l'élément de base 11 et à une autre extrémité sur un des trous traversants 18 ou 18'. En cas de fuite, le fluide, qui a réussi à s'infiltrer entre la paroi externe du tube ou de la partie tubulaire 17 et la paroi interne du trou traversant 18 ou 18', vient remplir la cavité 19 et entre en contact avec le détecteur 14, lequel est configuré pour générer un signal, notamment de type électrique, en cas de contact avec ledit fluide. Ce signal est ensuite envoyé par liaison filaire 15 à une unité de contrôle chargée de gérer le fonctionnement d'un système d'alimentation en fluide caloporteur ou refroidisseur. La liaison filaire 15 pourra avantageusement être disposée à l'intérieur d'une rainure 16 formée au niveau de la face inférieure 11 b de l'élément de base 11. D'autres moyens de liaison, notamment à distance, pourront être envisagés pour transmettre le signal à l'unité de contrôle. Ce signal va donc alerter l'unité de contrôle qu'une fuite est en train de se produire sur le panneau en question. En réponse à ce signal, l'unité de contrôle va interrompre l'alimentation en fluide caloporteur ou refroidisseur de manière à éviter un accroissement de la fuite et va éventuellement émettre une alarme visuelle ou sonore à destination des occupants du bâtiment où est installé le panneau défectueux pour qu'ils effectuent les réparations qui s'imposent. En complément ou en remplacement de cette unité de contrôle, il pourra être prévu d'équiper le panneau 10 d'un moyen indicateur intégré à l'élément de base 11, ledit moyen indicateur étant apte à émettre un signal visuel ou sonore lorsqu'il reçoit le signal émis par le détecteur. Ainsi, il est envisageable d'équiper l'élément de base 11 d'une LED qui sera reliée électriquement au détecteur 14 et qui s'allumera sous l'action d'un courant émis par le détecteur 14 en cas de contact avec le fluide caloporteur ou refroidisseur.

Dans une autre configuration (non représentée) de l'invention, les moyens de détection 14 pourront être positionnés sur la face supérieure 11a de l'élément de base 11 de telle sorte à être à l'aplomb d'une cavité formée dans l'élément de base 11, ladite cavité débouchant à l'une de ses extrémités sur la face supérieure 11a et à une autre extrémité sur un des trous traversants 18 ou 18' mentionnés précédemment. En cas de fuite, le fluide, qui a réussi à s'infiltrer entre la paroi externe du tube ou de la partie tubulaire 17 et la paroi interne du trou traversant 18 ou 18', vient remplir ladite cavité et entre en contact avec les moyens de détection 14. Ainsi, dans cette configuration, la fuite ne sera détectée par les moyens de détection 14 qu'une fois la cavité remplie de fluide. Ceci évitera notamment un problème de détection intempestive de fuite pouvant se produire dans la configuration précédente, dans le cas où du fluide qui s'est formé autour du tube 17 par condensation et qui s'est égoutté à l'intérieur de la cavité 19 sous l'effet de la gravité entre en contact avec les moyens de détection 14 disposés sous la face inférieure 11 b de l'élément de base 11. Dans la présente configuration, ce problème est évité du fait que le contact du fluide contenu dans la cavité avec les moyens de détection 14 ne se produit que pour une quantité de fluide minimale, ladite quantité minimale étant très supérieure à celle contenue dans une goutte de fluide formée par condensation.

Dans une configuration possible de l'invention, le détecteur 14 pourra consister en une paire d'électrodes adjacentes maintenues à des potentiels électriques différents, chaque électrode définissant une forme de peigne.

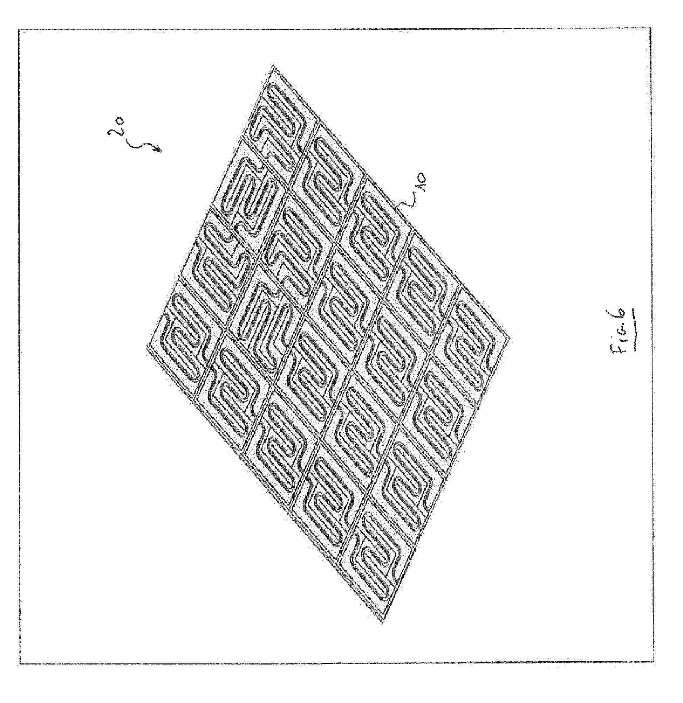

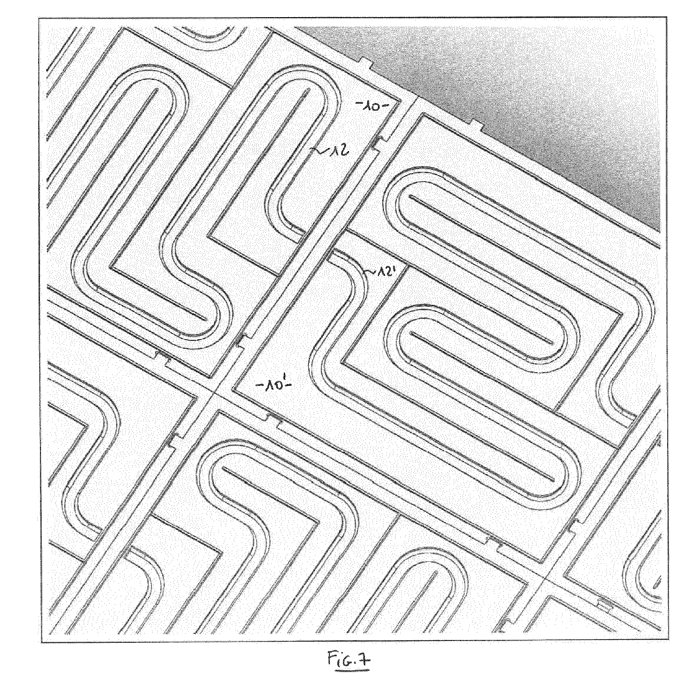

En référence aux figures 6 et 7, il est représenté une paroi formée par l'assemblage d'une pluralité de panneaux de construction 10 et 10' conformes à l'invention, lesdits panneaux étant connectés de manière mécanique et fluidique ensemble de telle sorte à réaliser un ou plusieurs circuits de chauffage et/ou de refroidissement à l'intérieur de la paroi, lesdits circuits étant définis par l'ensemble des rigoles 12 et 12' de chacun des panneaux. Dans une configuration possible de l'invention, la pluralité de panneaux 10 et 10' pourra ne former qu'une partie de la paroi, les zones restantes de la paroi étant alors formées par des panneaux de construction conventionnels.

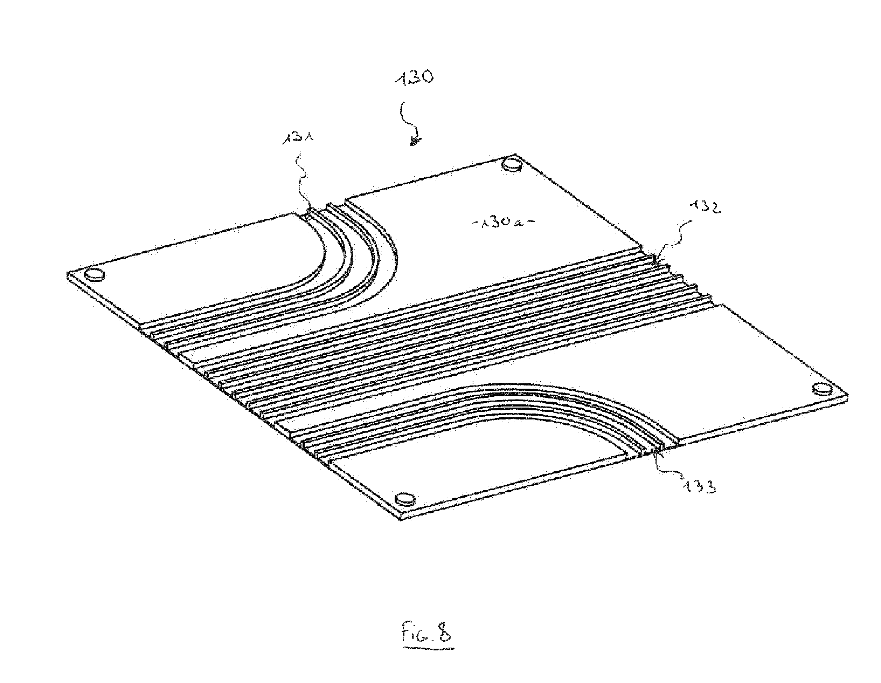

En référence à la figure 8, il est représenté un élément additionnel 130 se présentant sous la forme d'une plaque sensiblement plate, ladite plaque pouvant être fixée, notamment par collage, emboîtage, clipsage ou encastrement, sur la face inférieure 11 b de l'élément de base 11 de telle sorte à la recouvrir entièrement ou presque entièrement. La face 130a de la plaque 130 qui est en contact avec l'élément de base 11 sera avantageusement munie d'une série de canaux droits 132 ou partiellement courbes 131 et 133, lesdits canaux étant aptes à loger des câbles électriques ou d'autres câbles de connexion de type filaire (non représentés). Ce type de câbles est généralement utilisé pour raccorder des appareils électriques utilisés au sein d'un immeuble aux prises électriques de l'immeuble ou pour raccorder entre eux certains de ces appareils électriques. En les positionnant à l'intérieur des panneaux de construction de la présente invention, ces câbles sont cachés, ce qui améliore l'esthétisme de l'immeuble et évite, dans le cas d'un plancher, que les occupants de l'immeuble soient gênés par ces câbles lors de leur déplacement à l'intérieur de l'immeuble.

Les panneaux de la présente invention pourront posséder des dimensions quelconques, que ce soit en longueur, en largeur ou en épaisseur. Toutefois, dans le cas où ces panneaux seront installés sur des dalles existantes, ils posséderont une épaisseur la plus faible possible de manière à s'intégrer harmonieusement dans le bâtiment. Dans ce cas, leur épaisseur sera de préférence comprise entre 2,5 et 3 cm.

## Revendications

1. Panneau de construction (10) destiné à la réalisation de parois chauffantes et/ou refroidissantes de bâtiments comprenant:
- un élément de base (11) défini par une face supérieure (11 a), une face inférieure (11 b) et plusieurs faces latérales (11 c),
- des moyens de circulation (12) d'un fluide caloporteur ou refroidisseur disposés à l'intérieur dudit élément de base (11),
- un élément conducteur (13) sensiblement plat, fixé sur la face supérieure (11a) de l'élément de base (11) de telle sorte à la recouvrir entièrement ou presque entièrement, ledit élément conducteur (13) possédant une bonne conductivité thermique,
- des moyens de connexion mécanique (9) solidaires dudit élément de base (11), lesdits moyens de connexion mécanique (9) étant aptes à assurer une fixation amovible dudit panneau de construction avec un panneau de construction identique ou similaire disposé de manière adjacente à ce dernier,
- des moyens de connexion fluidique (17) aptes à permettre la circulation du fluide caloporteur ou refroidisseur entre ledit panneau de construction et un panneau de construction identique ou similaire fixé à ce dernier,
- des moyens de détection de fuite (14) aptes à détecter une fuite du fluide caloporteur ou refroidisseur au niveau de la face inférieure (11 b) ou supérieure (11 a) de l'élément de base (11).

2. Panneau de construction (10) selon la revendication 1, **caractérisé en ce qu'**il comprend également un élément isolant sensiblement plat, fixé sur la face inférieure (11 b) de l'élément de base (11) de telle sorte à la recouvrir entièrement ou presque entièrement, ledit élément isolant possédant une faible conductivité thermique.

3. Panneau de construction (10) selon l'une quelconque des revendications précédentes, **caractérisé en ce que** les moyens de circulation du fluide caloporteur ou refroidisseur sont des rigoles (12) formées à l'intérieur de l'élément de base (11).

4. Panneau de construction (10) selon la revendication 3, **caractérisé en ce que** les rigoles (12) définissent une forme de serpentin couvrant la totalité ou une partie seulement de la surface de l'élément de base (11).

5. Panneau de construction (10) selon l'une quelconque des revendications précédentes, **caractérisé en ce que** l'élément conducteur (13) est réalisé dans un matériau choisi parmi l'acier, le grès et la céramique.

6. Panneau de construction (10) selon l'une quelconque des revendications précédentes, **caractérisé en ce que** l'élément conducteur (13) est recouvert d'une couche de décoration sur sa face qui n'est pas en contact avec la face supérieure (11 a) de l'élément de base (11).

7. Panneau de construction (10) selon l'une quelconque des revendications précédentes, **caractérisé en ce que** les moyens de connexion mécanique sont des saillies (9) et/ou des creux formés au niveau de la face inférieure (11b) et/ou supérieure (11a) de l'élément de base (11), lesdites saillies (9) et/ou creux étant aptes à être reçues à l'intérieur de creux correspondants, ou respectivement à recevoir des saillies correspondantes, formés dans un élément de base d'un panneau de construction identique ou similaire lors de la fixation dudit panneau de construction audit panneau de construction identique ou similaire.

8. Panneau de construction (10) selon l'une des revendications 3 et 4, **caractérisé en ce que** les moyens de connexion fluidique comprennent au moins un tube creux (17), à la périphérie duquel sont disposés de manière espacée plusieurs joints O-ring (17a), et au moins un trou traversant (18) formé à l'intérieur de l'élément de base (11), ledit trou traversant (18) débouchant à l'une de ses extrémités sur une des rigoles (12) de l'élément de base (11) et à son autre extrémité sur une des faces latérales (11 c) de l'élément de base (11), ledit tube (17) étant apte à être reçu au moins partiellement à l'intérieur d'un trou traversant (18') d'un panneau de construction identique ou similaire ou, respectivement, ledit trou traversant (18) étant apte à recevoir au moins partiellement un tube dudit panneau de construction identique ou similaire lors de la fixation dudit panneau de construction audit panneau de construction identique ou similaire.

9. Panneau de construction (10) selon l'une des revendications 3 et 4, **caractérisé en ce que** les moyens de connexion fluidique comprennent, d'une part, au moins une partie tubulaire (17) formée en relief au niveau d'une face latérale (11 c) de l'élément de base (11), ladite partie tubulaire (17) étant munie le long de sa périphérie et de manière espacée de plusieurs joints O-ring (17a), et, d'autre part, au moins un trou traversant (18) formé à l'intérieur de l'élément de base (11), ledit trou traversant (18) débouchant à l'une de ses extrémités sur une des rigoles (12) de l'élément de base (11) et à son autre extrémité sur une des faces latérales (11 c) de l'élément de base (11), ladite partie tubulaire (17) étant apte à être reçue à l'intérieur d'un trou traversant (18') d'un panneau de construction identique ou similaire ou, respectivement, ledit trou traversant (18) étant apte à recevoir au moins partiellement une partie tubulaire dudit panneau de construction identique ou similaire lors de la fixation dudit panneau de construction audit panneau de construction identique ou similaire

10. Panneau de construction (10) selon l'une des revendications 8 et 9, **caractérisé en ce que** les moyens de détection de fuite (14) comprennent une paire d'électrodes adjacentes maintenues à des potentiels électriques différents, ladite paire d'électrodes étant disposée de manière adjacente à une cavité (19) formée à l'intérieur de l'élément de base (11), ladite cavité (19) débouchant à l'une de ses extrémités sur la face inférieure (11 b) ou supérieure (11 a) de l'élément de base (11) et à une autre extrémité sur un trou traversant (18) faisant partie des moyens de connexion fluidique.

11. Panneau de construction (10) selon l'une quelconque des revendications précédentes, **caractérisé en ce qu'**il comprend également un moyen indicateur apte à émettre un signal visuel ou sonore lorsqu'une fuite du fluide caloporteur ou refroidisseur est détectée par les moyens de détection de fuite (14).

12. Panneau de construction (10) selon l'une quelconque des revendications précédentes, **caractérisé en ce qu'**il comprend un élément additionnel (130) sensiblement plat, fixé sur la face inférieure (11 b) de l'élément de base (11) de telle sorte à la recouvrir entièrement ou presque entièrement, ledit élément additionnel étant muni d'un ou plusieurs canaux (131, 132, 133) sur une face (130a) qui est en contact avec l'élément de base (11), lesdits canaux étant aptes à loger des câbles électriques ou d'autres câbles de connexion de type filaire.

13. Paroi (20), comprenant une pluralité de panneaux de construction (10) selon l'une quelconque des revendications 1 à 12, lesdits panneaux étant connectés de manière mécanique et fluidique ensemble de telle sorte à réaliser un ou plusieurs circuits de chauffage et/ou de refroidissement à l'intérieur de la paroi, chaque circuit de chauffage et/ou de refroidissement pouvant être raccordé à un système d'alimentation en fluide caloporteur ou refroidisseur.

14. Paroi (20) selon la revendication 13, **caractérisée en ce qu'**elle définit un plancher, un plafond ou un mur de bâtiment.

15. Système d'alimentation en fluide caloporteur ou refroidisseur destiné à alimenter en fluide caloporteur ou refroidisseur une paroi (20) selon l'une quelconque des revendications 13 à 14, **caractérisé en ce qu'**il comprend des moyens de contrôle aptes à recevoir des signaux émis par les moyens de détection de fuite (14) des panneaux (10) constitutifs de la paroi (20) et à interrompre l'alimentation en fluide caloporteur ou refroidisseur lorsqu'une fuite est détectée par lesdits moyens de détection de fuite (14).
